# EUROPEAN PATENT SPECIFICATION

(11) **EP 0 502 744 B1**
(45) Date of publication and mention of the grant of the patent: **04.09.1996**
(21) Application number: 92301925.1
(22) Date of filing: 06.03.1992
(51) Int. Cl.: G09G 3/36, G06F 3/147

(54) **Display control apparatus capable of efficiently driving a display unit**
Anzeigesteuergerät, das imstande ist, ein Anzeigegerät wirksam zu steuern
Appareil de commande d'affichage capable de commander efficacement un dispositif d'affichage

(30) Priority: 07.03.1991 JP 68029/91
(43) Date of publication of application: 09.09.1992
(73) Proprietor: NEC CORPORATION, Tokyo (JP)
(72) Inventor: Kamezawa, Hiroshi, c/o NEC Corporation, Minato-ku, Tokyo (JP)
(74) Representative: Orchard, Oliver John

(56) References cited:
- EP-A- 0 381 021
- EP-A- 0 419 908

## Description

This invention relates to a display control apparatus for controlling a display unit which is typically an LCD (liquid crystal display).

In the manner which will later be described more in detail, a conventional LCD control apparatus is for use in controlling an LCD. The LCD control apparatus comprises an MPU (a microprocessor unit), an LCD controller, and a driving circuit for driving the LCD. The MPU produces an LCD control signal onto an LCD control bus to control the LCD controller. The LCD controller receives the LCD control signal from the LCD control bus and produces an LCD drive signal onto an LCD drive control bus to drive the LCD. The driving circuit comprises a clock generator for generating a clock signal of an alternating waveform for supply to the LCD controller and a voltage supply circuit for supplying a voltage signal to the LCD controller for driving the LCD.

In operation, the LCD controller delivers the LCD drive signal to the LCD when supplied with the LCD control signal from the MPU. It should, however, be noted that the LCD is continuously driven by the LCD controller while the LCD controller supplies the LCD with a driving voltage in response to the voltage signal and with the clock signal. That is to say, the driving voltage is continuously supplied, in addition to the clock signal, to the LCD even when the driving circuit may not be driven.

In connection with the above, it should be noted that the LCD need not be driven during an appreciably long interval of time with the LCD controller alone driven. As a result, the LCD is quickly deteriorated. In other words, the conventional LCD control apparatus makes the LCD have a shorter life time. Moreover, power consumption in the driving circuit is objectionable.

EP-A-0 381 021 discloses a display control apparatus in which the operator can disable the clock signal.

It is consequently an object of this invention to provide an LCD control apparatus capable of making an LCD have a longer life.

It is another object of this invention to provide an LCD control apparatus which is of the type described and is capable of decreasing power consumption of a driving circuit.

According to this invention, there is provided a display control apparatus which is for controlling a display unit and which comprises: a processor unit for producing an indication signal indicative of one of a sleep-in operation and a wake-up operation; decoding and latching means for decoding the indication signal and for latching an operation signal representative of one of the sleep-in operation and the wake-up operation; and driving means for driving the display unit when the operation signal is latched to represent the wake-up operation.

Fig. 1 is a block diagram of an LCD and a conventional LCD control apparatus;
Fig. 2(a) exemplifies a driving voltage for use in driving an LCD in general;
Fig. 2(b) exemplifies a clock signal CL for use in driving an LCD controller in general;
Fig. 3 is a block diagram of an LCD control apparatus according to an embodiment of this invention;
Fig. 4 is a block diagram of a decoding and latching circuit for use in the LCD control apparatus depicted in Fig. 3;
Fig. 5 is a timing chart for use in describing wake-up operation of the LCD control apparatus shown in Fig. 3; and
Fig. 6 is a timing chart for use in describing sleep-in operation of the LCD control apparatus illustrated in Fig. 4.

### Description of the Preferred Embodiment:

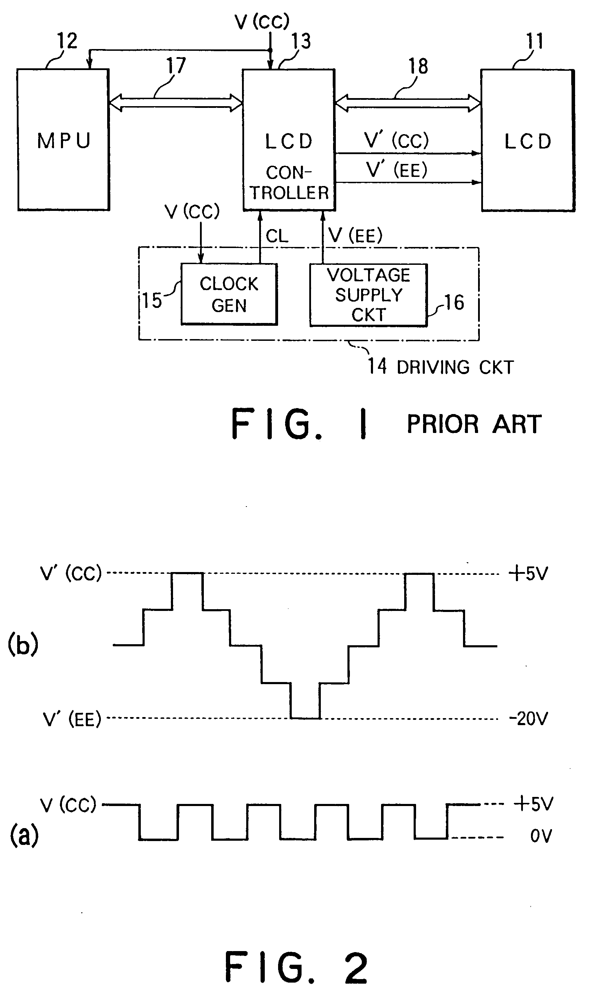

Referring to Fig. 1, a conventional LCD (liquid crystal display) control apparatus will first be described in order to facilitate an understanding of the present invention. The LCD control apparatus is for use in controlling an LCD 11.

the LCD control apparatus comprises an MPU 12 (microprocessor unit), an LCD controller 13, and a driving circuit 14 for driving the LCD 11. The MPU 12 is controlled by programming software to thereby produce an eight-bit LCD control signal onto an n-bit LCD control bus 17, where n represents an integer which is not less than eight. The LCD controller 13 receives the LCD control signal from the LCD control bus 17 and produces an eight-bit LCD drive signal onto an m-bit LCD drive bus 18, where m represents an integer which is not less than eight and may or may not be equal to n. The eight-bit LCD drive signal is data for indicating whether each display element (not shown) in the LCD should be turned on or not,

The driving circuit 14 comprises a clock generator 15 for generating a clock signal CL of a rectangular waveform for putting the LCD controller 13 in operation. A minus voltage supply circuit 16 is for supplying a minus voltage signal V(EE) for driving the LCD 11.

Figs. 2(a) and 2(b) will be referred to with Fig. 1 continuously referred to. The clock generator 15 produces the clock signal CL which varies in the manner exemplified in Fig. 2(a) between V(CC) or plus 5 volts and 0 volt. Supplied with the clock signal CL and the minus voltage V(EE), the LCD controller 13 produces the LCD drive signal on the bus 18 and supplies a driving voltage variable between V′(CC) and V′(EE) which are, for example, between V(CC) or plus 5 volts and V(EE) or minus 20 volts.

In operation the LCD controller 13 receives the LCD control signal from the MPU 12. The LCD controller 13 produces the LCD drive signal towards the LCD 11. The LCD 11 is driven by the driving voltage in accordance with the LCD drive signal from the bus 18 and generates a display element driving voltage varying between V′(CC) and V′(EE) as shown in Fig. 2(b) so that display data appear on the LCD 11.

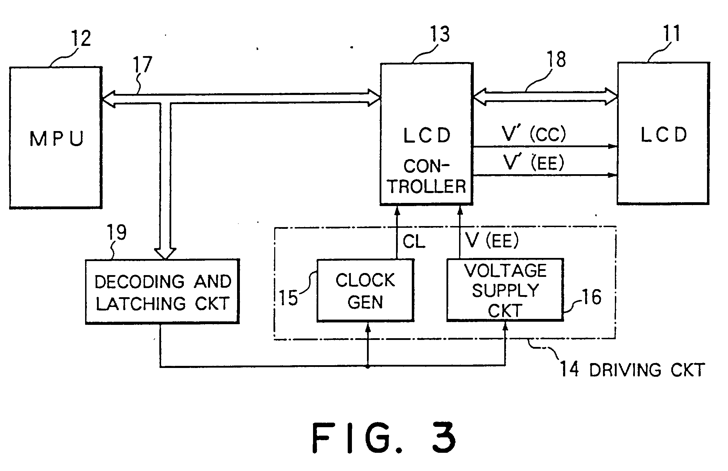

Referring now to Fig. 3, the description will be directed to an LCD control apparatus according to a preferred embodiment of this invention. The illustrated LCD control apparatus comprises similar parts which are designated by like reference numerals and which are similarly operable with likewise named signals including the clock signal and the driving voltage described in conjunction with Figs. 2(a) and 2(b). A decoding and latching circuit 19 is added.

In Fig. 3, the decoding and latching circuit 19 is connected to the clock generator 15 and the voltage supply circuit 16 of the driving circuit 14 and to the LCD control bus 17. The MPU 12 delivers an indication signal as a part of the LCD signal onto the LCD control bus 17. The indication signal automatically or otherwise indicates a sleep-in mode and a wake-up one at a time. The indication signal is an eight-bit parallel signal. The decoding and latching circuit 19 decodes the indication signal into an operation signal indicative of one of sleep-in operation and wake-up operation that is indicated by the indication signal. The decoding and latching circuit 19 furthermore latches the operation signal to send a latched signal to the clock generator 15 and the voltage supply circuit 16.

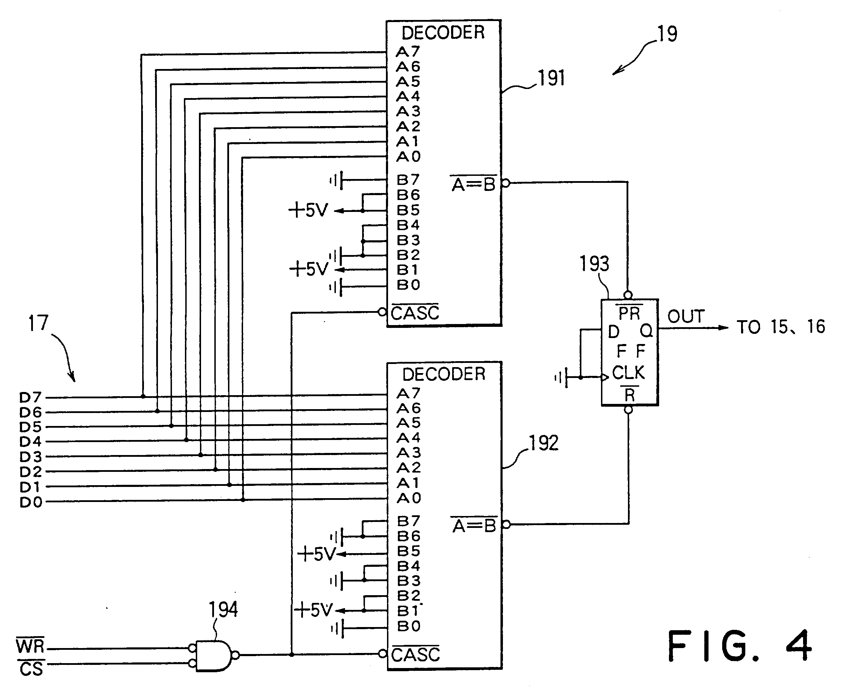

Referring to Fig. 4, the decoding and latching circuit 19 comprises first and second decoders 191 and 192, a D-type flip-flop (FF) 193, and an AND gate 194. Each of the decoders 191 and 192 has zeroth through seventh data signal input terminals A0 to A7, zeroth through seventh driving signal input terminals B0 to B7, an output data terminal A=B, and a cascade terminal CASC. In the first decoder 191, the first, fifth, and sixth driving signal input terminals B1, B5, and B6 are supplied in common with 5 volts. The zeroth, second, third, fourth, and seventh driving signal input terminals B0, B2, B3, B4, and B7 are grounded. In the second decoder 192, the first, second, and fifth driving signal input terminals B1, B2, and B5 are supplied in common with 5 volts. The zeroth, third, fourth, sixth, and seventh driving signal input terminals B0, B3, B4, B6, and B7 are grounded.

In Fig. 4, the LCD control bus 17 is depicted to deliver zeroth through seventh bits D0 to D7, a write control bit WR, and a chip select bit CS as the indication signal. Given a logic zero level when the indication signal is made to indicate the sleep-in or the wake-up mode, the write control bit WR controls writing data from the microprocessor unit (MPU) into the first and the second decoders 191 and 192 and through the LCD control and the LCD drive buses 17 and 18 (Fig. 3) into the liquid crystal display (LCD) 11. Similarly given a logic zero level, the chip select CS bit selects the first and the second decoders 191 and 192. The write control and the chip select bits WR and CS are delivered to the AND gate 194. The AND gate 194 delivers an AND output to the cascade terminals CASC's to activate the first and the second decoders 191 and 192 when both the chip select bit CS and the write control signal WR are given the logic zero level.

The D-type flip-flop 193 is for latching an operation signal which is produced to represent one of the wake-up and the sleep-in operation in the manner which is described above and will presently be described in detail. The D-type flip-flop 193 has a preset terminal PR, a reset terminal R, a data input terminal D, a data output terminal Q, and a clock signal terminal CLK. The data input terminal D and the clock signal terminal CLK are connected in common to ground and are not used in the example being illustrated.

The first decoder 191 is for decoding the indication signal indicative of the wake-up mode into a wake-up operation signal which appears at the output terminal A=B. The wake-up operation signal serves as an active preset signal and is supplied to the preset terminal PR of the D-type flip-flop 193.

When the second decoder 192 decodes the indication signal indicative of a sleep-in mode into a sleep-in operation signal, an active reset signal is delivered to the reset terminal depicted at R. The sleep-in operation signal appears at A=B as an output of the decoder 192.

The D-type flip-flop 193 is for latching as the latched signal one of the wake-up and the sleep-in operation signals that is produced by a pertinent one of the first and the second decoders 191 and 192. The D-type flip-flop 193 delivers the latched signal to the clock generator 15 and the driving circuit 16.

It will first be assumed that the D-type flip-flop 193 delivers the wake-up operation signal to the clock generator 15 and the voltage supply circuit 16. The clock generator 15 delivers the clock signal CL to the LCD controller 13. The voltage supply circuit 16 delivers the minus voltage signal V(EE) to the LCD controller 13. The liquid crystal display 11 is put in operation of displaying the display data which are supplied to the liquid crystal display 11 in the manner known in the art.

It will next be assumed that the D-type flip-flop 193 delivers the sleep-in operation signal to the clock generator 15 and the voltage supply circuit 16 with the indication signal switched to indicate the sleep-in mode rather than the wake-up mode. The clock generator 15 stops generation of the clock signal CL. The voltage supply circuit 16 stops delivery of the liquid crystal display controller 13 or decreases an absolute value of the minus voltage signal V(EE). The liquid crystal display 11 is put out of operation.

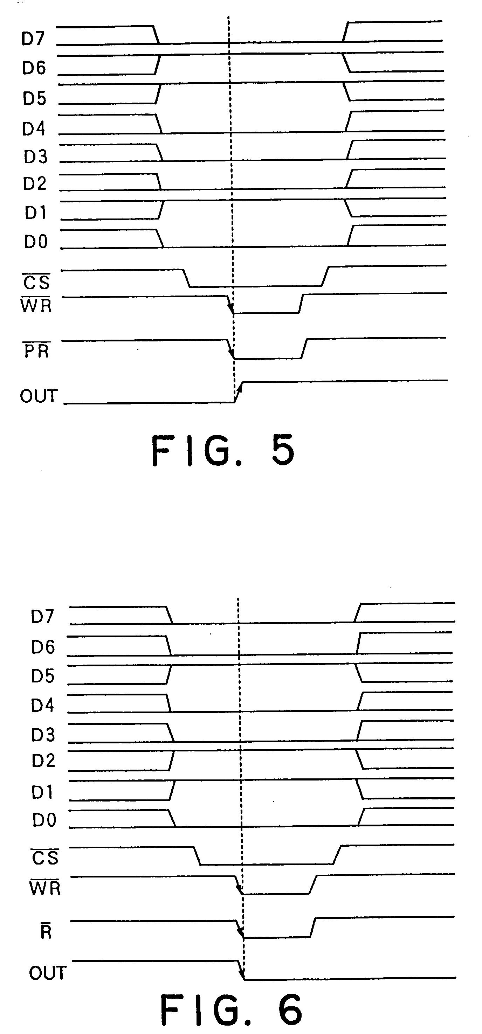

Referring to Figs. 5 and 6 in addition to Fig. 4, operation will be described in detail. In the example being illustrated, the indication signal indicates the wake-up operation when the seventh through the zeroth bits D7 to D0 and indicative of (01100010). The sleep in operation is indicated by (00100110). The indication signal further includes the write control signal WR and the chip select signal CS. When both the write control signal WR and the chip select signal CS are given the logic zero level to be "LOW", one of the wake-up and sleep-in operation is carried out at the same time.

In Fig. 5 the seventh through the zeroth bits D7 to D0 of the indication signal are depicted along first or top through seventh rows labelled D7 to D0. In Fig. 6, the seventh through the zeroth bits D7 to D0 of the indication signal are depicted alike.

Attention will be directed to a selected time instant indicated by vertical dashed lines. It will be presumed that the chip select bit CS is activated before the selected time instant in the manner depicted along a ninth row in each of Figs. 5 and 6.

When the write control signal WR becomes active as shown along a tenth row in Fig. 5, the wake-up operation signal is delivered from the first decoder 191 to the D-type flop-flop 193 to give a logic one of "HIGH" level to the preset terminal PR in the manner illustrated along an eleventh row by the preset terminal PR. The D-type flip-flop 193 produces the operation signal with a "HIGH" level OUT as exemplified along a twelfth or bottom row. As a result, the output Q of the D-type flip-flop 193 becomes active (HIGH). Thus, the display data appears on the liquid crystal display 11 until the indication signal is switched to indicate the sleep-in mode.

If it is unnecessary for the liquid crystal display 11 to be driven by the liquid crystal display controller 13 for one reason or another, the microprocessor unit 11 supplies the liquid crystal display control bus 17 with the indication signal made to indicate the sleep-in operation. In this case, the decoder 192 is activated. Inasmuch as the D-type flip-flop 193 is activated at that time, the display data fades away from the liquid crystal display 11. That is to say, the liquid crystal display 11 is not driven from that time continuously until the indication signal is switched to again indicate the wake-up mode.

Reviewing to Figs. 3 through 6, it is now clearly understood that the illustrated LCD controller 13 is not only to make the liquid crystal display 11 have a longer life and but is capable of decreasing power consumption of the driving circuit 14.

While this invention has thus far been described in specific conjunction with a preferred embodiment thereof, it will now readily be possible for those skilled in the art to put this invention into practice in various other manners. For example, this invention is not only applicable to the liquid crystal display 11 driven by the above-mentioned supply voltage but is applicable to a display unit which is driven by an operable supply voltage.

On indicating one of two operations that is the wake-up operation or the sleep-in operation, the indication signal may have only one bit rather than the zeroth through the seventh bits D0 to D7.

## Claims

1. A display control apparatus for controlling a display unit, said display control apparatus comprising:
a processor unit (12) for producing an indication signal indicative of one of a sleep-in operation and a wake-up operation;
decoding and latching means (19) for decoding said indication signal and latching an operation signal representative of one of said sleep-in operation and said wake-up operation; and
driving means (13) for driving said display unit when said operation signal is latched to represent said wake-up operation.

2. A display control apparatus as claimed in Claim 1, wherein said driving means is for suspending drive of said display unit when said operation signal is latched to represent said sleep-in operation.

3. A display control apparatus as claimed in Claim 1, wherein said decoding and latching means is for latching said operation signals with one and the other of high and low levels when said indication signal indicates said wake-up indication signal and said sleep-in operation signal.

4. An apparatus as claimed in Claim 1, wherein said decoding and latching means comprises:
decoding means for decoding said indication signal into one and the other of sleep-in and wake-up indication signals; and
single latching means for latching a selected one of said sleep-in signal and said wake-up indication signals as said operation signal.

5. An apparatus as claimed in Claim 4, wherein said decoding means comprises:
first decoding means for decoding the indication signal indicative of said wake-up operation into said wake-up indication signal; and
second decoding means for decoding the indication signal indicative of said sleep-in operation into said sleep-in indication signal;
said single latching means being for latching one of said wake-up and said sleep-in signals into which the indication signals produced by said processor unit is decoded by one of said first and said second decoding means at a time.

## Patentansprüche

1. Sichtanzeigesteuerungsvorrichtung zum Steuern einer Sichtanzeige, wobei die Sichtanzeigesteuerungsvorrichtung aufweist:
eine Prozessoreinheit (12) zum Erzeugen eines einen Schlafmodus oder einen Weckmodus anzeigenden Anzeigesignals:
eine Decodier- und Signalspeichereinrichtung (19) zum Decodieren des Anzeigesignals und zum Speichern eines den Schlaf- oder den Weckmodus darstellenden Betriebssignals; und
eine Treibereinrichtung (13) zum Steuern der Sichtanzeige, wenn das gespeicherte Betriebssignal den Weckmodus darstellt.

2. Vorrichtung nach Anspruch 1, wobei die Treibereinrichtung die Steuerung der Sichtanzeige vorübergehend deaktiviert, wenn das gespeicherte Betriebssignal den Schlafmodus darstellt.

3. Vorrichtung nach Anspruch 1, wobei die Decodier- und Signalspeichereinrichtung das Betriebssignal mit einen hohen oder einem niedrigen Pegel speichert, wenn das Anzeigesignal das Betriebssignal für den Weck- bzw. den Schlafmodus anzeigt.

4. Vorrichtung nach Anspruch 1, wobei die Decodier- und Speichereinrichtung aufweist:
eine Decodiereinrichtung zum Decodieren des Anzeigesignals in das den Schlafmodus oder das den Weckmodus darstellende Anzeigesignal; und
eine Einzelsignalspeichereinrichtung zum Speichern des den Schlaf- oder des den Weckmodus anzeigenden Anzeigesignals als das Betriebssignal.

5. Vorrichtung nach Anspruch 4, wobei die Decodiereinrichtunq aufweist:
eine erste Decodiereinrichtung zum Decodieren des den Weckmodus anzeigenden Anzeigesignals in das Anzeigesignal für den Weckmodus; und
eine zweite Decodiereinrichtung zum Decodieren des den Schlafmodus anzeigenden Anzeigesignals in das Anzeigesignal für den Schlafmodus;
wobei die Einzelsignalspeichereinrichtung zu einem Zeitpunkt das Signal für den Weck- oder den Schlafmodus
speichert, in das die durcn die Prozessoreinheit erzeugten Anzeigesignale durch die erste und die zweite Decodiereinrichtung decodiert werden.

## Revendications

1. Dispositif de commande d'affichage pour commander une unité d'affichage, ledit dispositif de commande d'affichage comportant :
une unité (12) de processeur destinée à produire un signal d'indication indiquant une opération parmi une opération de mise en sommeil et une opération de réveil,
des moyens de décodage et de verrouillage (19) pour décoder ledit signal d'indication et verrouiller un signal d'opération représentatif d'une opération parmi ladite opération de mise en sommeil et ladite opération de réveil, et
des moyens d'activation (13) pour activer ladite unité d'affichage lorsque ledit signal d'opération est verrouillé afin de représenter ladite opération de réveil.

2. Dispositif de commande d'affichage selon la revendication 1, dans lequel lesdits moyens d'activation sont destinés à suspendre l'activation de ladite unité d'affichage lorsque ledit signal d'opération est verrouillé afin de représenter ladite opération de mise en sommeil.

3. Dispositif de commande d'affichage selon la revendication 1, dans lequel lesdits moyens de décodage et de verrouillage sont destinés à verrouiller lesdits signaux d'opération avec l'un et l'autre de niveaux haut et bas lorsque ledit signal d'indication indique ledit signal d'indication de réveil et ledit signal d'opération de mise en sommeil.

4. Dispositif selon la revendication 1, dans lequel lesdits moyens de décodage et de verrouillage comportent :
des moyens de décodage pour décoder ledit signal d'indication en l'un et l'autre des signaux d'indication de mise en sommeil et de réveil, et
des moyens de verrouillage uniques pour verrouiller un signal choisi parmi ledit signal de mise en sommeil et lesdits signaux d'indication de réveil en tant que ledit signal d'opération.

5. Dispositif selon la revendication 4, dans lequel lesdits moyens de décodage comportent :
des premiers moyens de décodage pour décoder le signal d'indication indiquant ladite opération de réveil en ledit signal d'indication de réveil, et
des seconds moyens de décodage pour décoder le signal d'indication indiquant ladite opération de mise en sommeil en ledit signal d'indication de mise en sommeil,
lesdits moyens de verrouillage uniques étant destinés à verrouiller l'un desdits signaux de réveil et de mise en sommeil en lesquels les signaux d'indication produits par ladite unité de processeur ont été décodés par un seul à la fois desdits premiers et desdits seconds moyens de décodage.
